# EUROPÄISCHE PATENTSCHRIFT

(11) **EP 3 548 736 B1**
(45) Veröffentlichungstag und Bekanntmachung des Hinweises auf die Patenterteilung: **10.03.2021**
(21) Anmeldenummer: 17809188.0
(22) Anmeldetag: 30.11.2017
(51) Int. Cl.: F03D 7/02

(54) **WINDKRAFTANLAGE**
WIND POWER PLANT
AÉROGÉNÉRATEUR

(30) Priorität: 02.12.2016 DE 102016014339; 02.12.2016 DE 202016007375 U
(43) Veröffentlichungstag der Anmeldung: 09.10.2019
(73) Patentinhaber: Krieger, Klaus, 50321 Brühl (DE); Van Egeren, Martin, 50321 Brühl (DE)
(72) Erfinder: Krieger, Klaus, 50321 Brühl (DE); Van Egeren, Martin, 50321 Brühl (DE)
(74) Vertreter: Hübsch, Dirk
(86) Internationale Anmeldenummer: PCT/EP2017/001394
(87) Internationale Veröffentlichungsnummer: WO 2018/099598

(56) Entgegenhaltungen:
- CH-A- 225 848
- DE-A1- 10 226 713
- DE-A1-102012 013 365
- US-A- 2 080 955
- US-A- 2 284 521

## Beschreibung

Die Erfindung betrifft eine Windkraftanlage mit mindestens einem Rotor, wobei der Rotor mindestens zwei Rotorblätter aufweist, wobei jedes Rotorblatt um eine im Wesentlichen radial ausgerichtete Verstellachse drehbar ist, wobei zur Einstellung der Rotorblätter mindestens eine Winkel-Verstelleinrichtung vorgesehen ist, wobei die Winkel-Verstelleinrichtung mindestens eine Steuerscheibe und mindestens zwei mit der Steuerscheibe zusammenwirkende Kurvenscheiben aufweist, wobei jede Kurvenscheibe um eine Drehachse drehbar gelagert ist, und wobei die Drehachse der jeweiligen Kurvenscheibe mit der jeweiligen Verstellachse des jeweiligen Rotorblattes zusammenfällt, insbesondere überlagert ist.

Im Stand der Technik, von dem die Erfindung ausgeht, ist eine Windkraftanlage bekannt (DE 102 26 713 A1), bei welcher der Rotor mehrere Rotorblätter aufweist und wobei das jeweilige Rotorblatt über einen drehbar in der Rotornabe gelagerten Wellenstumpf bzw. über diese Rotorblattlagerung wirksam mit einer an der Nabe ausgebildeten Rotorwelle verbunden ist. Dadurch, dass das jeweilige Rotorblatt drehbar gelagert ist, ist es bzgl. der Achse der Rotorblattwelle betrachtet, um seine bzw. diese im Wesentlichen radial ausgerichtete Verstellachse drehbar. Zur Einstellung, also zur jeweiligen Positionierung bzw. jeweiligen winkeligen Ausrichtung des jeweiligen Rotorblattes ist eine auf die jeweilige Verstellachse der Rotorblätter einwirkende Winkel-Verstelleinrichtung vorgesehen. Die hier realisierte Winkel-Verstelleinrichtung ist im Wesentlichen als ein "Kurvenscheibengetriebe" ausgebildet. Hierzu weist die Winkel-Verstelleinrichtung eine Steuerscheibe sowie mehrere mit der Steuerscheibe zusammenwirkende Kurvenscheiben auf. Hierbei wird die Steuerscheibe durch ein Federelement in Richtung der Kurvenscheiben kraftbeaufschlagt. Über die so als Kurvenscheibengetriebe ausgebildete Winkel-Verstelleinrichtung wird eine bestimmte Verdrehung / Ausrichtung des jeweiligen Rotorblattes, um dessen jeweilige Verstellachse gesteuert.

Weiterhin ist im Stand der Technik eine Windkraftanlage bekannt (DD 221 505 A1), bei der die Rotorblätter über eine als Stangengetriebe ausgeführte Winkel-Verstelleinrichtung entsprechend verstellt bzw. verdreht werden können. Es erfolgt hier eine Zwangsführung des jeweiligen Rotorblatts mittels einer in einem Führungsring ausgebildeten Steuerkurve, wobei der Führungsring am Wellenstumpf des jeweiligen Rotorblattes angeordnet ist. Die einzelnen Rotorblätter sind mit einem auf der Rotorwelle angeordnetem Stellrad wirksam verbunden, wobei mit Hilfe von zwischen den Wellenstümpfen der Rotorblätter und dem Stellrad vorgesehenen Schubkurbeln eine Verstellung erfolgt.

Weiterhin ist in der DE 20 2009 012 104 U1 eine Windkraftanlage beschrieben, die eine Art Stangengetriebe als eine Winkel-Verstelleinrichtung für die Rotorblätter einer Windkraftanlage aufweist, wobei die bestimmte radiale Verstellung eines jeweiligen Rotorblatts in eine axiale Verschiebung eines Stellgliedes mittels eines Gelenkhebels übertragen wird. Ferner wird die axiale Verschiebung des Stellgliedes mittels eines Dämpfers gegenüber schlagartigen Belastungen (aufgrund von Windböen) verzögert bzw. die Steuermechanik geschützt. Im Endeffekt ist auch hier eine Winkel-Verstelleinrichtung zur Regelung / Steuerung der Positionen / Ausrichtungen der Rotorblätter geschaffen.

Die im Stand der Technik bekannten Windkraftanlagen, insbesondere deren Winkel-Verstelleinrichtungen zur Verstellung bzw. Positionierung der Rotorblätter sind aber noch nicht optimal ausgebildet.

So ist bei der eingangs genannten Windkraftanlage (DE 102 26 713 A1), von der die Erfindung ausgeht, die jeweilige Einstellung / Ausrichtung in Bezug auf den Verstellwinkel des jeweiligen Rotorblattes und/oder der zeitliche Verlauf der Verstellung des jeweiligen Rotorblatts noch nicht ganz optimal. So kommen die umlaufenden Rotorblätter der Windkraftanlage beim Passieren des "Turmes" in dessen Rückstau ("Turm-Rückstau"), so dass hierdurch der gleichbleibende Umlauf der Rotorblätter negativ beeinflusst werden kann. Während ein Rotorblatt beim Umlauf den Turm-Rückstau passiert, kann sich auch der Verdrehwinkel eines Rotorblatts, insbesondere aufgrund der geänderten Windverhältnisse im Turm-Rückstau auch um beispielsweise 0,5° bis 5,0° ändern und wird anschliessend innerhalb einer sehr kurzen Zeitspanne beispielsweise von ca. 75 ms wieder zurückgeführt. Auch Windböen, Fall- und/oder Scherwinde, insbesondere auch hervorgerufen durch geographische Gegebenheiten (spezifische Küsten- und/oder Hügellandstriche etc.) haben einen entsprechenden Einfluss auf die Einstellung und/oder Ausrichtung der einzelnen Rotorblätter. Bei diesen hochdynamischen Vorgängen können dann Schwingungen in die Windkraftanlage, insbesondere in das jeweilige Rotorblatt induziert bzw. durch das jeweilige Rotorblatt hervorgerufen werden. Das bedeutet, dass bei einer Verstellung oder insbesondere bei mehreren sehr kurzfristig nacheinander folgenden Verstellungen des Verdrehwinkels die Rotorblätter bzw. die Lager der Wellenstümpfe der Rotorblätter (mit den zugehörigen Eigenfrequenzen) immer auch zu weiteren Schwingungen angeregt werden, was zu einer erhöhten Geräuschbildung führt und zu einer damit einhergehenden erhöhten Geräuschbelastung für die Umwelt führen kann.

Auch die weiteren aus dem Stand der Technik bekannten Windkraftanlagen (beispielsweise die DD 221 505 A1 und die DE 20 2009 012 104 U1) sind nicht optimal ausgebildet. Die hier als Stangengetriebe ausgeführten Winkel-Verstelleinrichtungen zur Realisierung der Verstellung der Rotorblätter sind aufgrund der realisierten Kraftübertragungsketten über Stangen, Gelenke, Dämpfer, mit sehr hohen Toleranzen behaftet. Dies führt zum einen auch zu einer erhöhten Störanfälligkeit bzw. zu einem erhöhtem Montage- und Wartungsaufwand und zum anderen, insbesondere durch die große Anzahl der Konstruktions-Komponenten auch zu einem erhöhten Bedarf an Bauraum, welcher üblicherweise bei Rotornaben mit einer darin integrierten Winkel-Verstelleinrichtung aber nur begrenzt vorhanden ist.

Der Erfindung liegt daher die Aufgabe zugrunde, die eingangs genannte Windkraftanlage nun derart auszugestalten und weiterzubilden, dass die durch die Windkraftanlage verursachten Geräusche verringert werden, sowie der Montage- und Wartungsaufwand und die damit verbundenen Kosten minimiert sind.

Die zuvor aufgezeigte Aufgabe ist nun zunächst dadurch gelöst, dass die Kurvenscheiben über mindestens ein Koppelelement funktional wirksam zwangsgekoppelt sind. Dadurch, dass insbesondere die Winkel-Verstelleinrichtung nunmehr so ausgebildet ist, dass die Kurvenscheiben über mindestens ein Koppelelement funktional wirksam zwangsgekoppelt sind, kann sichergestellt werden, dass alle Rotorblätter synchron positioniert und/oder ausgerichtet werden, insbesondere synchron in Bezug auf den Betrag des jeweiligen Verstellwinkels *ϕ* und der jeweiligen Verstellgeschwindigkeit *ϕ̇* des jeweiligen Rotorblattes. Ferner werden durch die synchrone Verstellung / Ausrichtung der Rotorblätter potentiell auftretende Schwingungen, wie bei einer Einzelblattsteuerung vermieden bzw. verhindert.

Ferner benötigt die hier nun entsprechend ausgebildete Winkel-Verstelleinrichtung einen geringen Bauraum und kann somit einfach und bauraumsparend in der Rotornabe untergebracht bzw. hierzu integriert werden. Des Weiteren ist der Montage- und Wartungsaufwand für eine derartige Winkel-Verstelleinrichtung und die damit verbundenen Kosten entsprechend reduziert.

Die eingangs genannten Nachteile sind daher vermieden und entsprechende Vorteile sind erzielt.

Es gibt nun eine Vielzahl von Möglichkeiten die erfindungsgemäße Windkraftanlage in vorteilhafter Art und Weise auszugestalten und weiterzubilden. Hierfür darf zunächst auf die dem Patentanspruch 1 nachgeordneten Patentansprüche verwiesen werden. Im Folgenden sollen nun mehrere bevorzugte Ausführungsbeispiele der Erfindung anhand der nachfolgenden Zeichnung und der zugehörenden Beschreibung näher erläutert werden. In der Zeichnung zeigt:

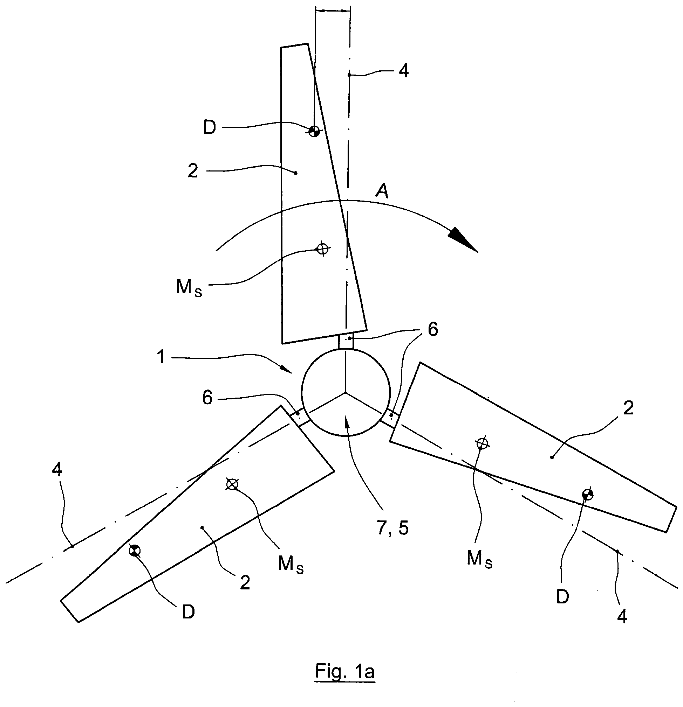

- Fig. 1a: den Rotor der erfindungsgemäßen Windkraftanlage von vorne in schematischer Darstellung,

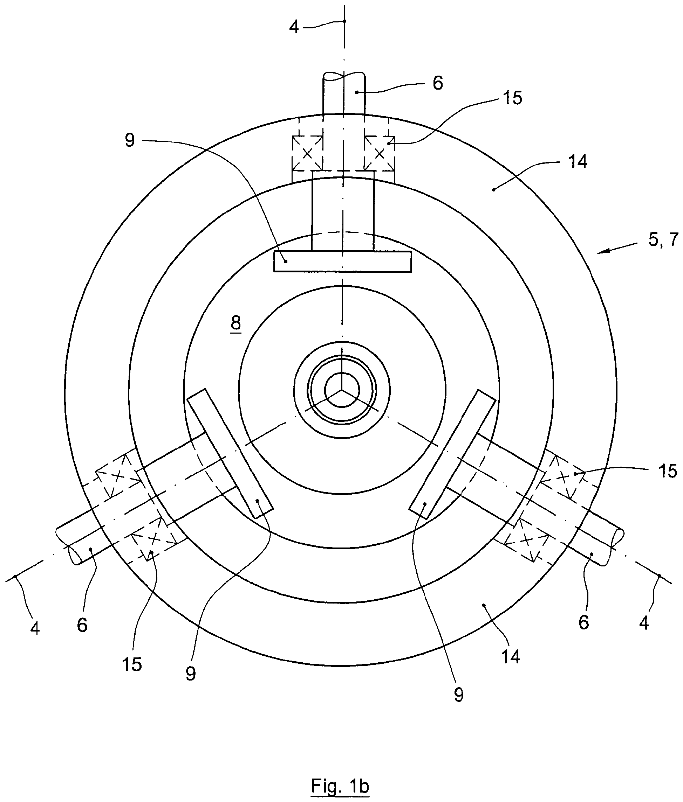

- Fig. 1b: in schematischer Darstellung das Innere einer Rotornabe, nämlich die wesentlichen Bestandteile der Winkel-Verstelleinrichtung mit Blick in die "geöffnete Rotornabe", jedoch ohne Darstellung der Koppelelemente,

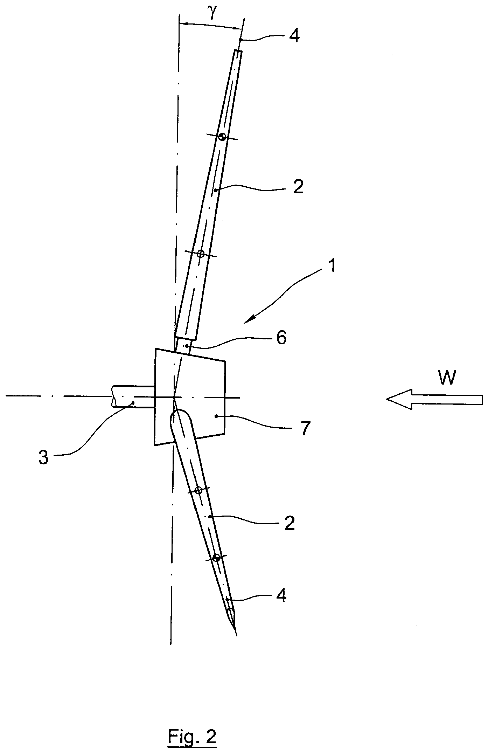

- Fig. 2: den Rotor der erfindungsgemäßen Windkraftanlage in schematischer Darstellung von der Seite,

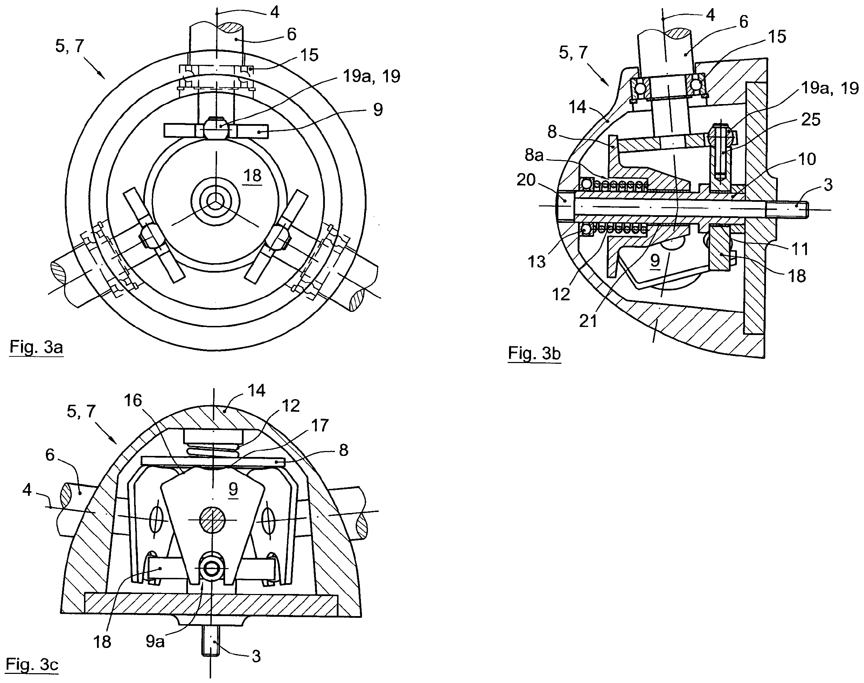

- Fig. 3a, 3b, 3c: eine vereinfachte jeweilige schematische Darstellung einer bevorzugten Ausführungsform der erfindungsgemäßen Windkraftanlage von hinten mit Blick in die "geöffnete Rotornabe" (Fig. 3a), von der Seite im Schnitt(Fig. 3b) und teilweise geschnitten in der Draufsicht (Fig. 3c), wobei das Innere der Rotornabe, mit den wesentlichen Bestandteilen in der "Neutralposition" der Rotorblätter dargestellt ist,

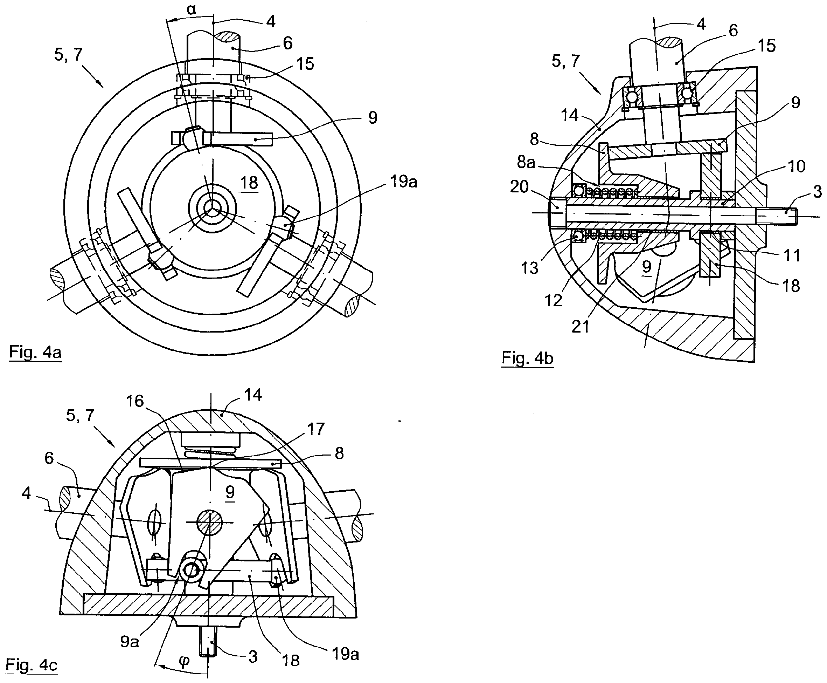

- Fig. 4a, 4b, 4c: eine vereinfachte jeweilige schematische Darstellung der in Fig. 3a bis 3c dargestellten bevorzugten Ausführungsform der erfindungsgemäßen Windkraftanlage von hinten mit Blick in die "geöffnete Rotornabe" (Fig. 4a), von der Seite im Schnitt (Fig. 4b) und teilweise geschnitten in der Draufsicht (Fig. 4c), wobei das Innere der Rotornabe mit den wesentlichen Bestandteilen mit "verdrehten" Rotorblättern dargestellt ist,

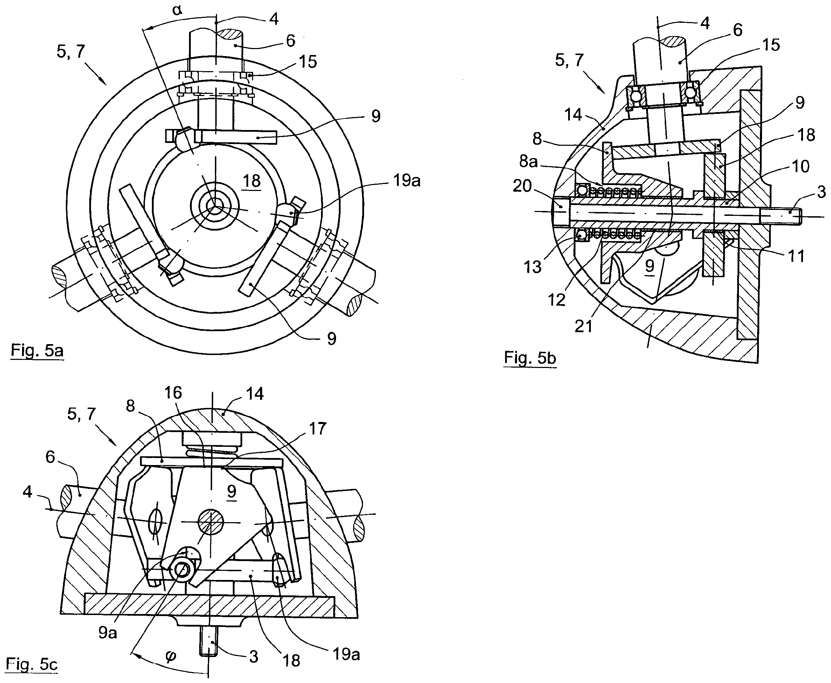

- Fig. 5a, 5b, 5c: eine vereinfachte jeweilige schematische Darstellung der in den Fig. 3a bis 3c bzw. Fig. 4a bis 4c dargestellten bevorzugten Ausführungsform der erfindungsgemäßen Windkraftanlage von hinten mit Blick in die "geöffnete Rotornabe" (Fig. 5a), von der Seite im Schnitt (Fig. 5b) und teilweise geschnitten in der Draufsicht (Fig. 5c), wobei das Innere der Rotornabe mit den wesentlichen Bestandteilen in der "Endposition" der Rotorblätter dargestellt ist,

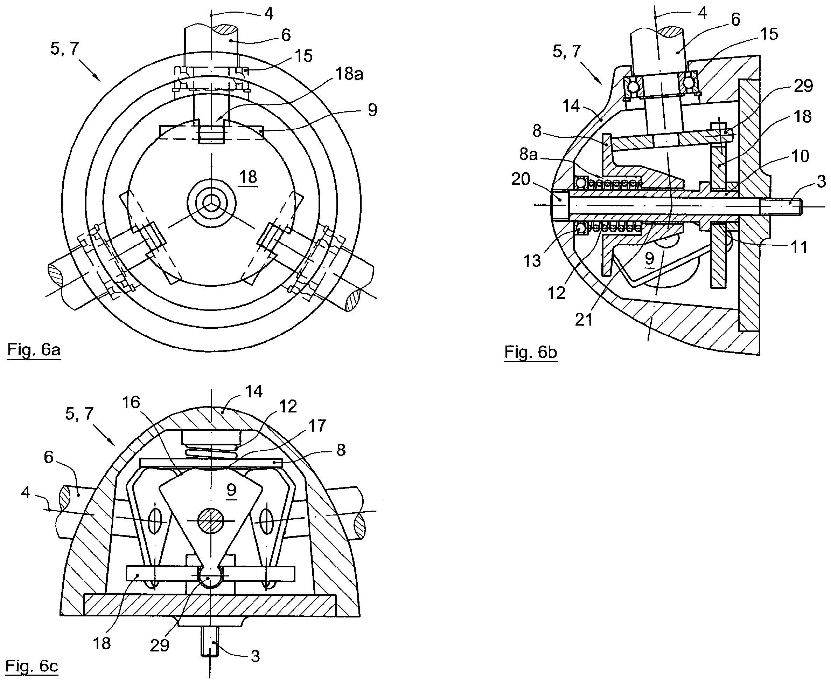

- Fig. 6a, 6b, 6c: eine vereinfachte jeweilige schematische Darstellung einer weiteren bevorzugten Ausführungsform der erfindungsgemäßen Windkraftanlage von hinten mit Blick in die "geöffnete Rotornabe" (Fig. 6a), von der Seite im Schnitt (Fig. 6b) und teilweise geschnitten in der Draufsicht (Fig. 6c), wobei das Innere der Rotornabe mit den wesentlichen Bestandteilen in der "Neutralposition" der Rotorblätter dargestellt ist,

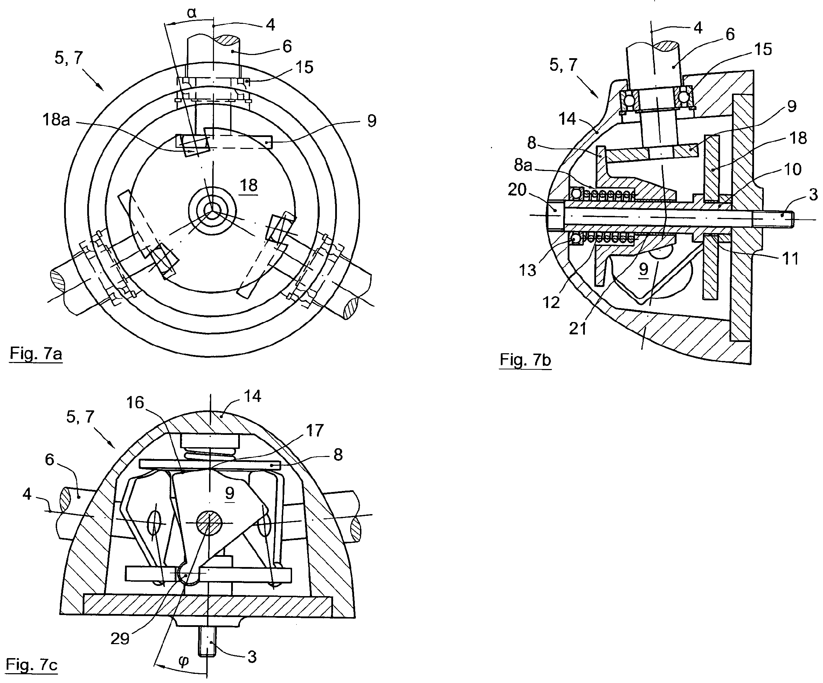

- Fig. 7a, 7b, 7c: eine vereinfachte jeweilige schematische Darstellung der in den Fig. 6a bis 6c dargestellten bevorzugten weiteren Ausführungsform von hinten mit Blick in die "geöffnete Rotornabe" (Fig. 7a), von der Seite im Schnitt (Fig. 7b) und teilweise geschnitten in der Draufsicht (Fig. 7c), wobei das Innere der Rotornabe mit den wesentlichen Bestandteilen mit "verdrehten" Rotorblättern dargestellt ist,

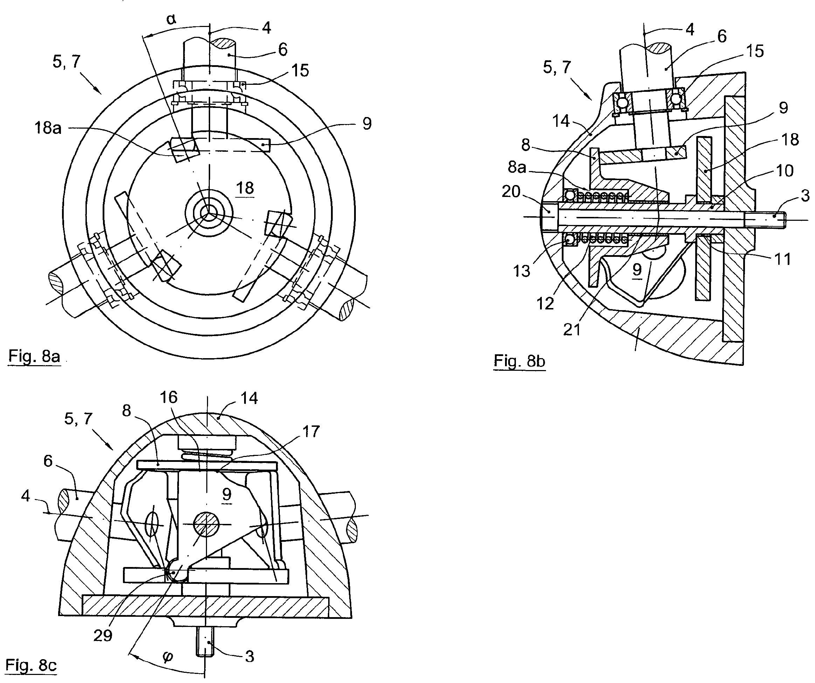

- Fig. 8a, 8b, 8c: eine schematische Darstellung der in den Fig. 6a bis 6c bzw. Fig. 7a bis 7c dargestellten Ausführungsform von hinten mit Blick in die "geöffnete Rotornabe" (Fig. 8a), von der Seite im Schnitt (Fig. 8b) und teilgeschnitten in der Draufsicht (Fig. 8c), wobei das Innere der Rotornabe mit den wesentlichen Bestandteilen in der "Endposition" der Rotorblätter dargestellt ist,

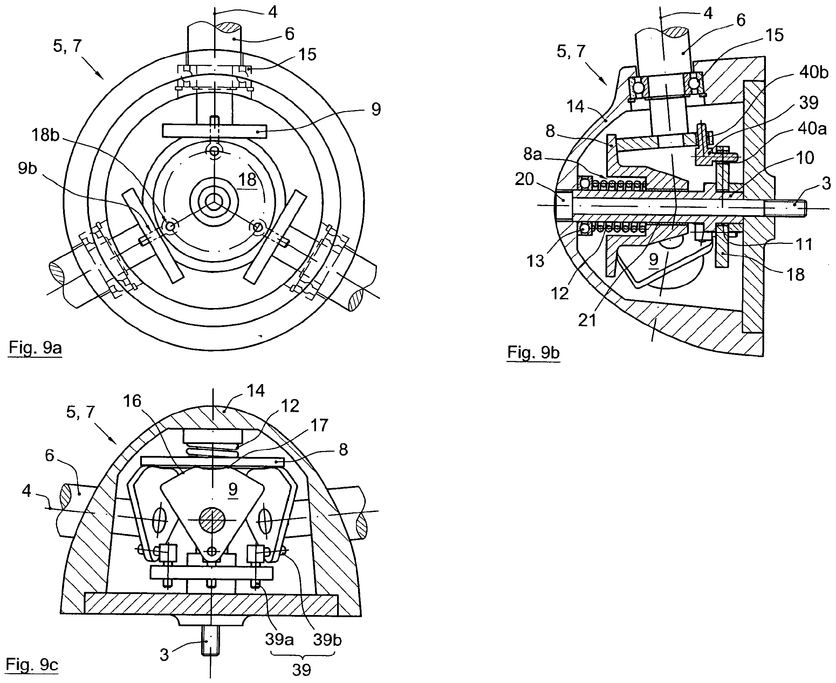

- Fig. 9a, 9b, 9c: eine vereinfachte jeweilige schematische Darstellung einer weiteren bevorzugten Ausführungsform der erfindungsgemäßen Windkraftanlage von hinten mit Blick in die "geöffnete Rotornabe" (Fig. 9a), von der Seite im Schnitt(Fig. 9b) und teilweise geschnitten in der Draufsicht (Fig. 9c), wobei das Innere der Rotornabe mit den wesentlichen Bestandteilen in der "Neutralposition" der Rotorblätter dargestellt ist,

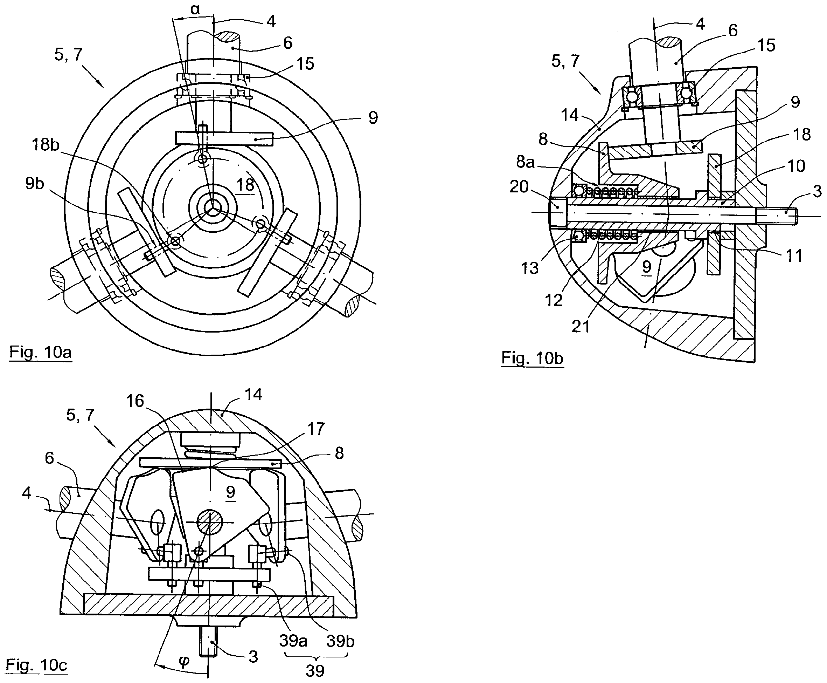

- Fig. 10a, 10b, 10c: eine vereinfachte jeweilige schematische Darstellung der in den Fig. 9a bis 9c dargestellten bevorzugten weiteren Ausführungsform von hinten mit Blick in die "geöffnete Rotornabe" (Fig. 10a), von der Seite im Schnitt (Fig. 10b) und teilweise geschnitten in der Draufsicht (Fig. 10c), wobei das Innere der Rotornabe mit den wesentlichen Bestandteilen mit "verdrehten" Rotorblättern dargestellt ist,

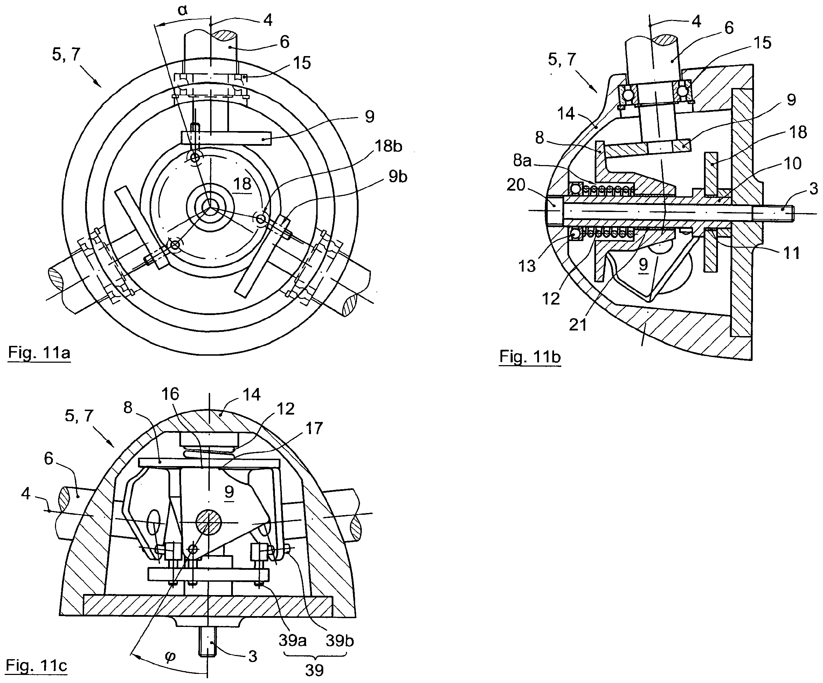

- Fig. 11a, 11b, 11c: eine vereinfachte jeweilige schematische Darstellung der in den Fig. 9a bis 9c bzw. Fig. 10a bis 10c dargestellten bevorzugten weiteren Ausführungsform von hinten mit Blick in die "geöffnete Rotornabe" (Fig. 11a), von der Seite im Schnitt (Fig. 11b) und teilweise geschnitten in der Draufsicht (Fig. 11c), wobei das Innere der Rotornabe mit den wesentlichen Bestandteilen in der "Endposition" der Rotorblätter dargestellt ist,

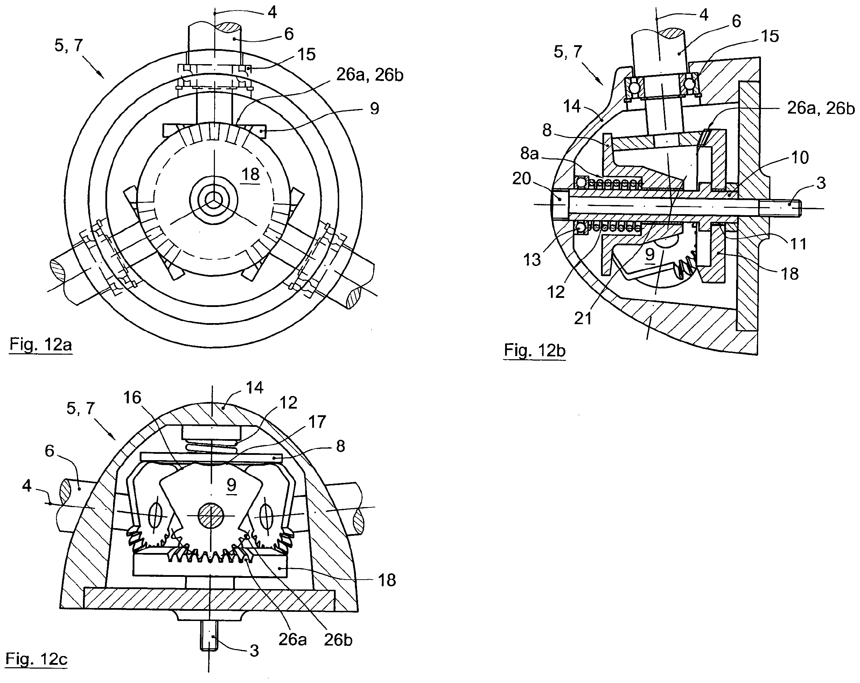

- Fig. 12a, 12b, 12c: eine vereinfachte jeweilige schematische Darstellung einer weiteren bevorzugten Ausführungsform einer erfindungsgemäßen Windkraftanlage von hinten mit Blick in die "geöffnete Rotornabe" (Fig. 12a), von der Seite im Schnitt(Fig. 12b) und teilweise geschnitten in der Draufsicht (Fig. 12c), wobei das Innere der Rotornabe mit den wesentlichen Bestandteilen in der "Neutralposition" der Rotorblätter dargestellt ist,

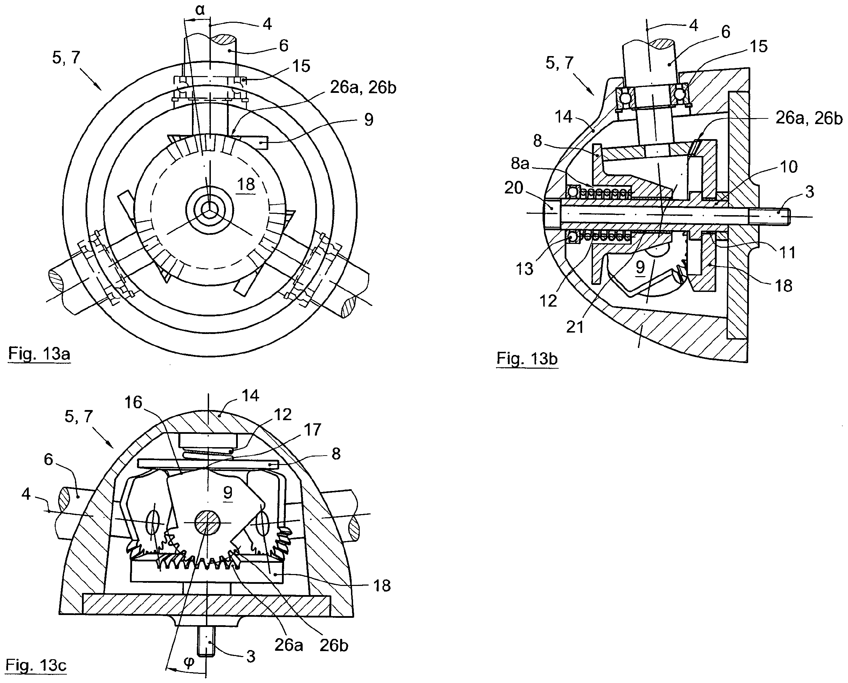

- Fig. 13a, 13b, 13c: eine vereinfachte jeweilige schematische Darstellung der in den Fig. 12a bis 12c dargestellten bevorzugten weiteren Ausführungsform von hinten mit Blick in die "geöffnete Rotornabe" (Fig. 13a), von der Seite im Schnitt (Fig. 13b) und teilweise geschnitten in der Draufsicht (Fig. 13c), wobei das Innere der Rotornabe mit den wesentlichen Bestandteilen mit "verdrehten" Rotorblättern dargestellt ist,

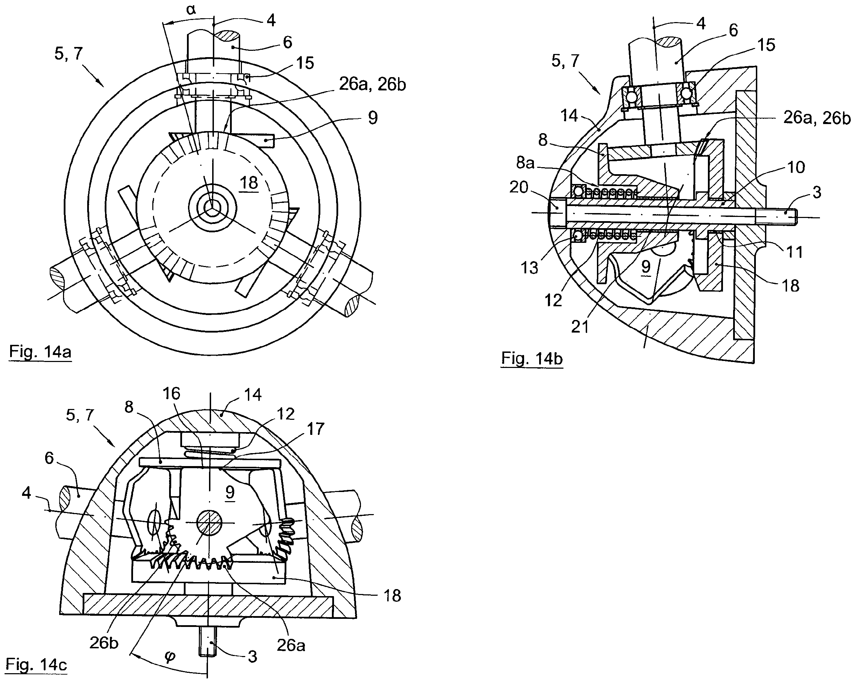

- Fig. 14a, 14b, 14c: eine vereinfachte jeweilige schematische Darstellung der in den Fig. 12a bis 12c bzw. Fig. 13a bis 13c dargestellten Ausführungsform von hinten mit Blick in die "geöffnete Rotornabe" (Fig. 14a), von der Seite im Schnitt (Fig. 14b) und teilweise geschnitten in der Draufsicht (Fig. 14c), wobei das Innere der Rotornabe mit den wesentlichen Bestandteilen in der "Endposition" der Rotorblätter dargestellt ist,

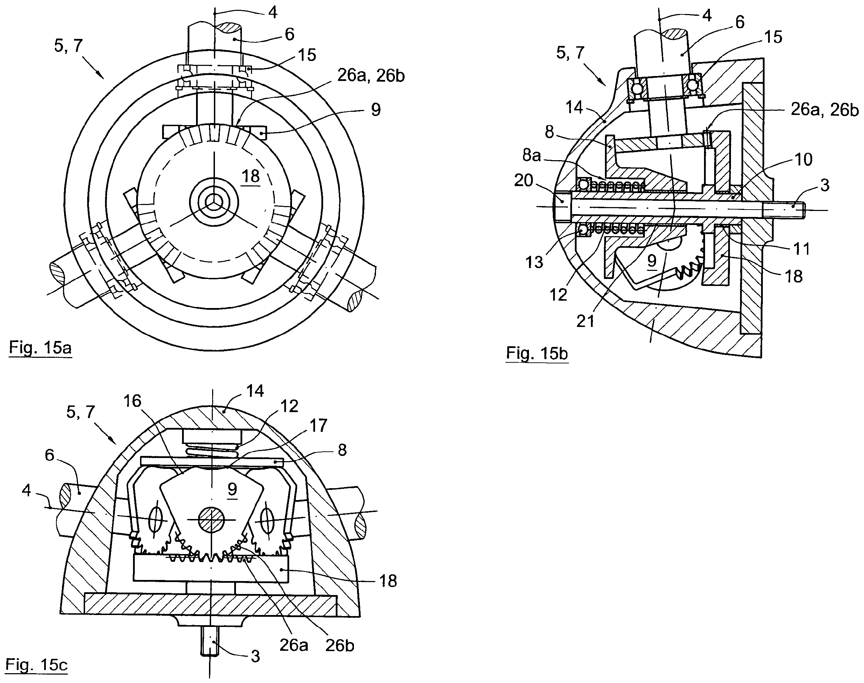

- Fig. 15a, 15b, 15c: eine vereinfachte jeweilige schematische Darstellung einer weiteren bevorzugten Ausführungsform einer erfindungsgemäßen Windkraftanlage von hinten mit Blick in die "geöffnete Rotornabe" (Fig. 15a), von der Seite im Schnitt(Fig. 15b) und teilweise geschnitten in der Draufsicht (Fig. 15c), wobei das Innere der Rotornabe mit den wesentlichen Bestandteilen in der "Neutralposition" der Rotorblätter dargestellt ist,

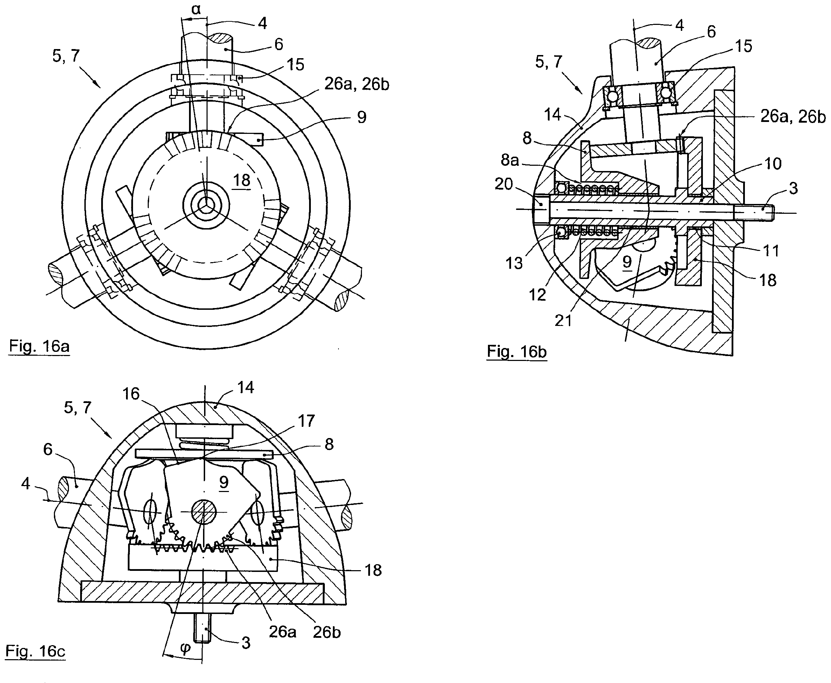

- Fig. 16a, 16b, 16c: eine vereinfachte jeweilige schematische Darstellung der in den Fig. 15a bis 15c dargestellten Ausführungsform von hinten mit Blick in die "geöffnete Rotornabe" (Fig. 16a), von der Seite im Schnitt (Fig. 16b) und teilweise geschnitten in der Draufsicht (Fig. 16c), wobei das Innere der Rotornabe mit den wesentlichen Bestandteilen mit "verdrehten" Rotorblättern dargestellt ist,

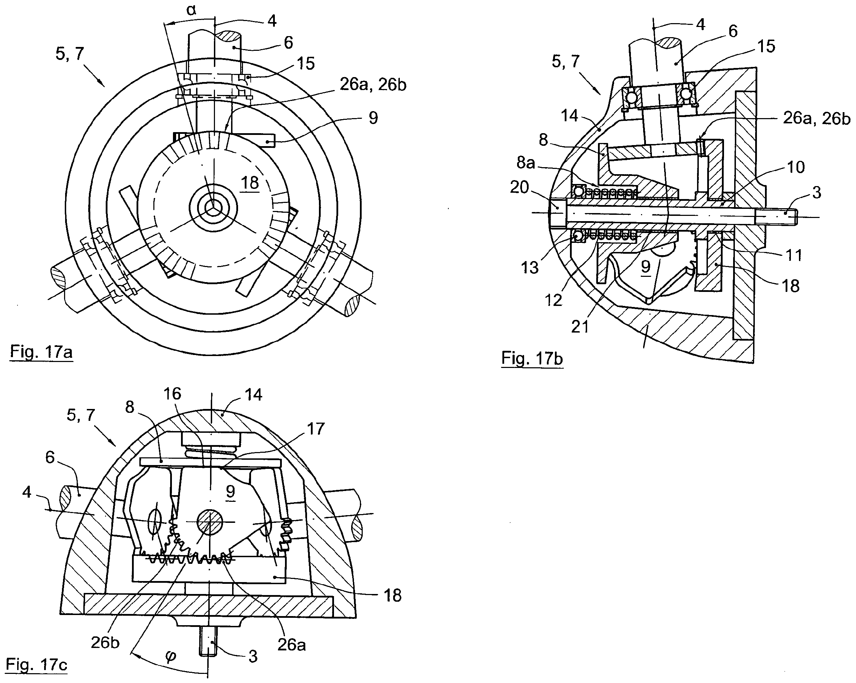

- Fig. 17a, 17b, 17c: eine vereinfachte jeweilige schematische Darstellung der in den Fig. 15a bis 15c bzw. Fig. 16a bis 16c dargestellten Ausführungsform von hinten mit Blick in die "geöffnete Rotornabe" (Fig. 17a), von der Seite im Schnitt (Fig. 17b) und teilweise geschnitten in der Draufsicht (Fig. 17c), wobei das Innere der Rotornabe mit den wesentlichen Bestandteilen in der "Endposition" der Rotorblätter dargestellt ist,

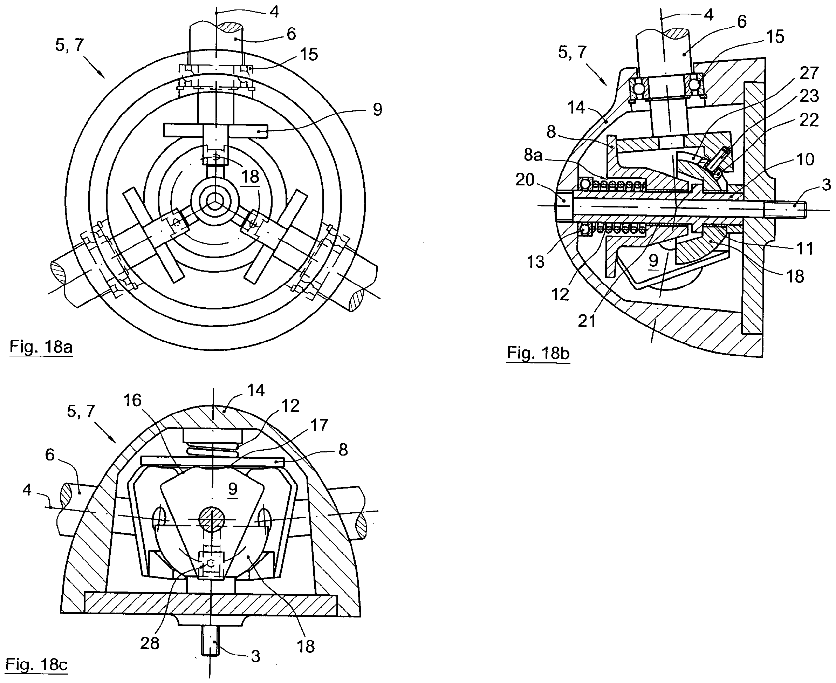

- Fig. 18a, 18b, 18c: eine vereinfachte jeweilige schematische Darstellung einer weiteren bevorzugten Ausführungsform einer erfindungsgemäßen Windkraftanlage von hinten mit Blick in die "geöffnete Rotornabe" (Fig. 18a), von der Seite im Schnitt(Fig. 18b) und teilweise geschnitten in der Draufsicht (Fig. 18c), wobei das Innere der Rotornabe mit den wesentlichen Bestandteilen in der "Neutralposition" der Rotorblätter dargestellt ist,

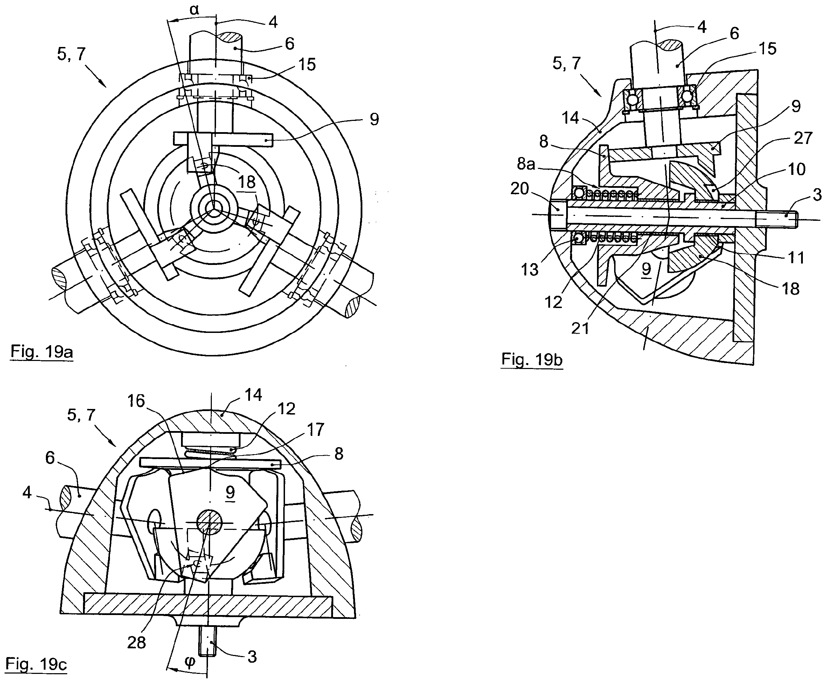

- Fig. 19a, 19b, 19c: eine vereinfachte jeweilige schematische Darstellung der in den Fig. 18a bis 18c dargestellten Ausführungsform von hinten mit Blick in die "geöffnete Rotornabe" (Fig. 19a), von der Seite im Schnitt (Fig. 19b) und teilweise geschnitten in der Draufsicht (Fig. 19c), wobei das Innere der Rotornabe mit den wesentlichen Bestandteilen mit "verdrehten" Rotorblättern dargestellt ist,

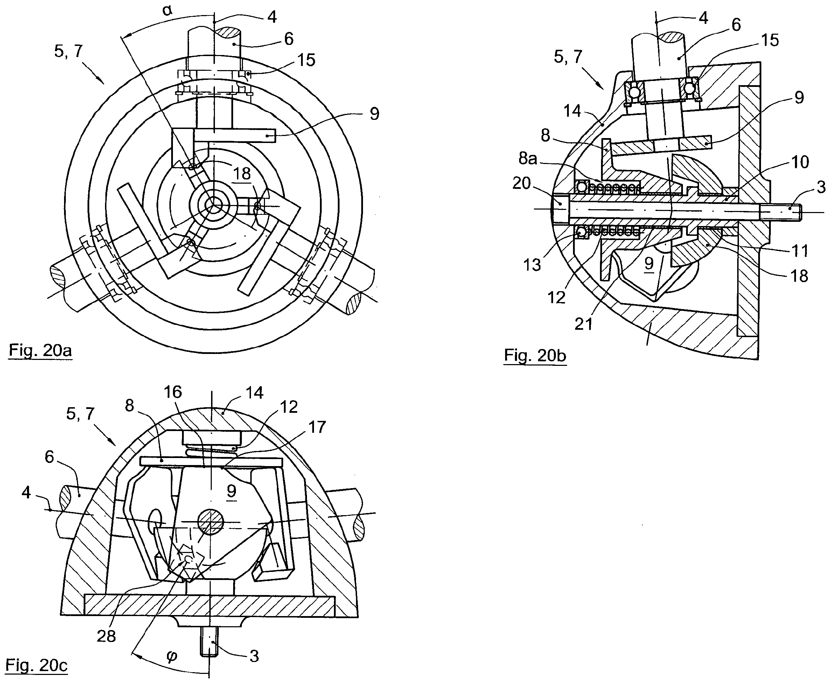

- Fig. 20a, 20b, 20c: eine vereinfachte jeweilige schematische Darstellung der in den Fig. 18a bis 18c bzw. Fig. 19a bis 19c dargestellten Ausführungsform von hinten mit Blick in die "geöffnete Rotornabe" (Fig. 20a), von der Seite im Schnitt (Fig. 20b) und teilweise geschnitten in der Draufsicht (Fig. 20c), wobei das Innere der Rotornabe mit den wesentlichen Bestandteilen in der "Endposition" der Rotorblätter dargestellt ist.

Die Fig. 1a, Fig.lb und Fig. 2 zeigen wesentliche Bestandteile einer hier nicht in ihrer Gesamtheit bzw. nicht im Einzelnen dargestellten Windkraftanlage.

Die Windkraftanlage weist mindestens einen Rotor 1 mit mindestens zwei Rotorblättern 2, vorzugsweise mit mehreren, hier mit drei Rotorblättern 2 auf. Die Rotorblätter 2 sind mit einer im Wesentlichen horizontal angeordneten Rotorwelle 3 wirksam verbunden. Die Rotorblätter 2 weisen hierzu jeweils einen Wellenstumpf 6 auf, der innerhalb einer Rotornabe 7 drehbar gelagert ist. Dementsprechend sind die Rotorblätter 2 um eine im Wesentlichen radial ausgerichtete Verstellachse 4 drehbar, wobei zur Einstellung und/oder Ausrichtung der Rotorblätter 2 mindestens eine Winkel-Verstelleinrichtung 5 vorgesehen ist.

Fig. 2 zeigt eine im Wesentlichen radial ausgerichtete Verstellachse 4 der Rotorblätter 2, hier im wesentlichen mit einem bestimmten Winkel γ zur Vertikalen ausgerichtet. Der Winkel γ liegt insbesondere im Bereich von 0 bis 30 Grad.

Hierbei wird durch die Rotorblätter 2 bei Anströmung mit der entsprechenden Windgeschwindigkeit eines Windes W eine Rotationsbewegung der Rotorwelle 3 verursacht, da die Rotorblätter 2 mit der Rotorwelle 3 wirksam verbunden sind, was im Folgenden noch näher erläutert werden soll.

Die Rotorwelle 3 ist insbesondere im Wesentlichen horizontal verlaufend angeordnet. Es ist auch durchaus denkbar, dass die Rotorwelle 3 leicht schräg oder sogar vertikal angeordnet ist. Vorzugsweise ist die Rotorwelle 3 jedoch im Wesentlichen horizontal verlaufend angeordnet und mit einem hier nicht dargestellten Generator entsprechend wirksam verbunden, um entsprechende Energie bzw. Elektrizität zu erzeugen.

Wie die Fig. 1b erkennen lässt, ist durch die jeweilige Achse des jeweiligen Wellenstumpfes 6 im Wesentlichen die jeweilige Verstellachse 4 definiert bzw. durch die Achse des jeweiligen Lagers 15 die jeweilige Verstellachse 4 definiert.

Wie aus der Fig. 1a ebenfalls gut zu erkennen ist, fallen die einzelnen Rotorblätter 2, also die Längsachsen der Rotorblätter 2 nicht mit der jeweiligen Verstellachse 4 zusammen, sondern sind so angeordnet, dass der jeweilige Druckpunkt D der Rotorblätter 2 der jeweiligen Verstellachse 4 bei der Rotation des Rotors 1 hinterherläuft. Die Drehbewegung des Rotors 1 ist in Fig. 1a mit dem entsprechenden Pfeil A dargestellt.

Fig. 2 zeigt nun den Rotor 1 in schematischer Darstellung von der Seite. Gut zu erkennen sind die in der Rotornabe 7 über die Wellenstümpfe 6 gelagerten Rotorblätter 2 sowie die hier schematisch angedeutete und teilweise dargestellte Rotorwelle 3. Aufgrund der Darstellung in Fig. 2 ist zu erkennen, dass die Verstellachsen 4 bzgl. der Rotorwelle 3 zwar im Wesentlichen radial verlaufen, vorzugsweise allerdings die Verstellachsen 4 der Rotorblätter 2 im Wesentlichen leicht nach vorne geneigt sind, so dass die Rotorblätter 2 einen spitzen Winkel, insbesondere einen Winkel γ mit der allgemeinen Rotorebene bilden. Die Anordnung der Rotorblätter 2, die Ausbildung eines Winkels γ sowie die Ausbildung eines nachlaufenden Druckpunktes D haben im Betrieb der Windkraftanlage ein Verstellmoment, insbesondere in Richtung der Fahnenstellung (Position / Ausrichtung in Richtung des Windes) zur Folge.

Die Fig. 3 (a,b,c) bis Fig. 20 (a,b,c) zeigen schematische Darstellungen von bevorzugten Ausführungsformen der Windkraftanlage jeweils von hinten, von der Seite im Schnitt und teilweise in der Draufsicht, wobei das Innere der Rotornabe mit den wesentlichen Bestandteilen, insbesondere mit Blick in die "geöffnete Rotornabe", für unterschiedliche Positionen der Rotorblätter 2 dargestellt ist.

Die in den Fig. 3 (a,b,c) bis Fig. 20 (a,b,c) dargestellte Winkel-Verstelleinrichtung 5 weist mindestens zwei mit einer Steuerscheibe 8 zusammenwirkende Kurvenscheiben 9, hier insbesondere drei Kurvenscheiben 9 auf. Die Kurvenscheiben 9 sind derart drehbar angeordnet ist, dass die jeweilige Drehachse der Kurvenscheibe 9 mit der Verstellachse 4 des jeweiligen Rotorblattes 2 zusammenfällt, insbesondere überlagert ist.

Die eingangs beschriebenen Nachteile sind nun zunächst dadurch vermieden, dass die Kurvenscheiben 9 über mindestens ein Koppelelement 18 funktional wirksam zwangsgekoppelt sind. Dadurch, dass nunmehr mindestens ein Koppelelement 18 vorgesehen ist und die Kurvenscheiben 9 mit Hilfe des Koppelelementes 18 funktional wirksam zwangsgekoppelt sind, sind die eingangs genannten Nachteile vermieden und entsprechende Vorteile realisiert.

Insbesondere müssen keine aufwändigen und verschleißanfälligen zusätzlichen Stangenelemente, Dämpfer oder dergleichen vorgesehen werden, so dass insbesondere auch eine kurze Kraftübertragungskette mit einer insbesondere spielarmen Kraftübertragung und daher geringe Toleranzen und ein exakter Blatteinstellwinkel ϕ der Rotorblätter 2 mit der so ausgebildeten Windkraftanlage bzw. der so ausgebildeten Winkel-Verstelleinrichtung 5 realisierbar sind, was im Folgenden nun noch ausführlicher erläutert werden darf.

Weiterhin sind hier die Steuer- bzw. Reglerelemente, welche die Windkraftanlage bzw. die Winkel-Verstelleinrichtung 5 aufweist, vor Witterungseinflüssen wie Regen oder eintretender Vereisung, sowie Korrosion sehr gut geschützt, denn die Winkel-Verstelleinrichtung 5 bzw. die jeweiligen Komponenten können innerhalb der Rotornabe 7 im wesentlichen vollständig integriert werden, was im Folgenden ebenfalls ausführlicher beschrieben werden wird.

Im Ergebnis ist daher eine kostengünstige, verschleißarme sowie - im Endeffekt - insbesondere nahezu keine Toleranzen aufweisende Winkel-Verstelleinrichtung 5 geschaffen, mit deren Hilfe die Rotorblätter 2 optimal positionierbar sind und das Anregen bzw. die Erzeugung von Schwingungen weitestgehend vermieden ist.

Die bevorzugten Ausführungsformen der Windkraftanlage bzw. der hier dargestellten Winkel-Verstelleinrichtung 5 weisen, wie in den Fig. 3 (a,b,c) bis Fig. 20 (a,b,c) ersichtlich, eine Steuerscheibe 8, drei Kurvenscheiben 9 und ein Koppelelement 18 auf, wobei die Kurvenscheiben 9 funktional wirksam zwangsgekoppelt sind. Ferner ersichtlich ist zudem, dass die Steuerscheibe 8, sowie das Koppelelement 18 auf einer Steuerwelle 10 innerhalb der Rotornabe 7 angeordnet sind, wobei die Steuerwelle 10 als ein Bestandteil (Teilwelle) der Rotorwelle 3 ausgebildet ist bzw. mit der Rotorwelle 3 wirksam verbunden ist. Jeweils die Steuerscheibe 8, wie auch das Koppelelement 18 sind auf der Steuerwelle 10 mit Hilfe von Lagern 11 und 21, insbesondere ist das Lager 21 als Gleitbuchse und das Lager 11 als Gleit- oder Wälzlager ausgeführt, drehbar gelagert. Die Steuerscheibe 8 ist zudem auf der Steuerwelle 10 axial verschiebbar gelagert. Die Steuerwelle 10 ist außerdem als Hohlwelle ausgeführt, so dass die Rotornabe 7 mit Hilfe einer lösbar kraftschlüssigen Verbindung, vorzugsweise mittels eines Schraubelementes 20, mit der Rotorwelle 3 zur Übertragung des Drehmomentes des Rotors 1 verbindbar ist. Die Winkel-Verstelleinrichtung 5 ist derart platzsparend konstruiert, dass diese innerhalb der Rotornabe 7 integrierbar ist. Dies erhöht die Montageleichtigkeit der gesamten Windkraftanlage, da für die Montage nur ein Schraubelement 20 benötigt wird, was zusätzlich von großem Vorteil ist. Die Winkel-Verstelleinrichtung 5 und die Rotornabe 7 bilden daher ein leicht montierbares Modul.

Ferner ist aus den Fig. 3 (a,b,c) bis Fig. 20 (a,b,c) ersichtlich, dass die einzelnen Kurvenscheiben 9 mit der Steuerscheibe 8 in einem reibschlüssigen Kontakt stehen. Hierbei wird die Steuerscheibe 8 durch ein Federelement 12 in Richtung der Kurvenscheiben 9 kraftbeaufschlagt. Das Federelement 12 ist drehbar mit Hilfe eines Lagers 13 gegenüber der - inneren - Umfangswandung 14 der Rotornabe 7 abgestützt, so dass eine Rotation der Steuerscheibe 8 und auch eine entsprechende Rotation des Federelementes 12 ermöglicht ist. Auch die Ausbildung des Federelementes 12, hier insbesondere als Schraubendruckfeder ausgeführt, hat sich als bevorzugte Ausführungsform herausgestellt. Es ist aber auch denkbar, andere Federelemente, bspw. Tellerfedern oder dergleichen hier vorzusehen.

Die Drehachse der Steuerscheibe 8 sowie des Koppelelements 18 korrespondieren mit der Drehachse der Steuerwelle 10 bzw. der Rotorwelle 3. Die Kurvenscheiben 9 befinden sich jeweils an den unteren Enden der Wellenstümpfe 6 der Rotorblätter 2 und sind hier drehfest angeordnet. Durch die Koppelscheibe 18 sind die Kurvenscheiben 9 miteinander zwangsgekoppelt.

Weiterhin sind die Achsen der einzelnen Wellenstümpfe 6, insbesondere damit die Verstellachsen 4 der jeweiligen Rotorblätter 2 definiert. Der jeweilige Wellenstumpf 6 ist innerhalb der Umfangswandung 14 der Rotornabe 7 drehbar gelagert. Hierzu ist jeweils ein entsprechendes Lager 15 vorgesehen. In Abhängigkeit der Anzahl der Rotorblätter 2 ist nun auch eine entsprechende Anzahl an Wellenstümpfen 6 bzw. an Kurvenscheiben 9 vorgesehen. So ist durchaus denkbar, dass die Winkel-Verstelleinrichtung 5 daher - wie hier - nicht nur drei, sondern insbesondere zwei, vier oder auch mehr Rotorblätter 2 bzw. Kurvenscheiben 9 aufweist, die mit der entsprechenden Steuerscheibe 8 zusammenwirken, und wobei die Kurvenscheiben 9 dann durch mindestens ein Koppelelement 18 miteinander zwangsgekoppelt sind. Dies ist abhängig von der jeweiligen Ausführungsform der Windkraftanlage, insbesondere des Rotors 1 und/oder der Anzahl der Rotorblätter 2.

Von Vorteil ist auch, dass die Steuerscheibe 8 und auch das Federelement 12 rotierbar gelagert sind, was im Folgenden noch näher erläutert werden soll. Hierdurch bedingt sind auch Verschleißerscheinungen, insbesondere ein Abrieb zwischen der Steuerscheibe 8 und den Kurvenscheiben 9 erheblich minimiert, denn aufgrund der Rotationsmöglichkeit der Steuerscheibe 8 zusammen mit der Schraubendruckfeder 12 kommt es zu einem geringen Reibverschleiß und zu einer hohen Regelgüte der Winkel-Verstelleinrichtung 5. Die vorstehenden Ausführungen zeigen auch, dass die hier realisierte Winkel-Verstelleinrichtung 5 als sogenannte "passive" Winkel-Verstelleinrichtung 5 ausgeführt ist.

Hierbei ist insbesondere von Vorteil, dass die gesamte Winkel-Verstelleinrichtung 5 im Wesentlichen innerhalb der Rotornabe 7 angeordnet ist und daher die einzelnen Elemente hier vor Witterungseinflüssen geschützt sind. Hierdurch bedingt werden die erforderlichen, auftretenden Kontakte nicht durch das Eindringen von Wasser oder anderen Witterungseinflüssen, wie Vereisungen oder Schmutz vermindert bzw. das Zusammenwirken der Elemente nicht beeinträchtigt.

Die in den Fig. 3 (a,b,c) bis Fig. 20 (a,b,c) schematisch dargestellten Kurvenscheiben 9 weisen in dem oberen Bereich eine entsprechende Kontur 16 auf. Der Verlauf der jeweiligen Kontur 16 der jeweiligen Kurvenscheibe 9 umfasst zwei Extrema 17. Diese Extrema 17 dienen für die Realisierung der "Nulllage" bzw. der Neutralposition der jeweiligen Kurvenscheibe 9 auf der Steuerscheibe 8. Anders ausgedrückt, mit Hilfe der Extrema 17 ist die Nulllage / Neutralposition der jeweiligen Kurvenscheibe 9 relativ zur Steuerscheibe 8 eindeutig definiert. Damit ist eine optimale Einstellung der Neutralposition der Rotorblätter 2 gewährleistet.

Die Fig. 3 (a, b, c) bis 20 (a, b, c) zeigen nun unterschiedliche Ausführungsformen für die Zwangskopplung der Kurvenscheiben 9 mit Hilfe eines Koppelelementes 18. Hierbei sind die jeweiligen Ausführungsformen bei unterschiedlicher Positionierung / Ausrichtung der Rotorblätter 2 bzw. der Kurvenscheiben 9 dargestellt, nämlich in der jeweiligen Neutralposition, in einer jeweiligen bestimmten Positionierung / Ausrichtung / Verdrehung und in der jeweiligen Endposition, wie aus den Fig. 3 (a, b, c) bis 20 (a, b, c) ersichtlich. Teilweise in den Figuren dargestellt, ist einerseits der Verstellwinkel ϕ der Rotorblätter 2 sowie der Verdrehwinkel α Koppelelementes 18.

In einer bevorzugten Ausführungsform wie in den Fig. 3a bis 3c dargestellt (oder auch aus den Fig. 4 bis 17 ersichtlich), ist deutlich zu erkennen, dass das Koppelelement 18 zumindest teilweise scheibenförmig ausgeführt ist.

Zudem weist das Koppelelement 18 gemäß der Ausführungsform der Fig. 3 bis 5 zu dem Zweck der Zwangskopplung für jede Kurvenscheibe 9 einen Mitnehmerzapfen 19 auf. Der Mitnehmerzapfen 19 ist an einem an dem Koppelelement 18 vorgesehenen Lagerbolzen 25 bewegbar, insbesondere drehbar gelagert. Der jeweilige Mitnehmerzapfen 19 greift in eine Ausnehmung 9a der Kurvenscheibe 9 ein und ist somit formschlüssig mit der Kurvenscheibe 9 wirksam verbunden. Vorzugsweise ist der Mitnehmerzapfen 19 hierzu als eine symmetrische Kugelscheibe 19a ausgeführt.

Aus den Figuren 4a bis 4c, und 5a bis 5c wird die erfindungsgemäße Winkel-Verstelleinrichtung wie in den Fig. 3a bis 3c dargestellt, wobei die Figur 4a, 4b, 4c aber eine Winkelstellung / bestimmte Ausrichtung der Rotorblätter 2 darstellen und in den Fig. 5a, 5b, 5c eine Endposition (Anschlagsposition) der Kurvenscheibe 9 dargestellt ist. Es wird deutlich, dass eine Verdrehung einer Kurvenscheibe 9 um die Verstellachse 4 eine Verdrehung des Koppelelements 18 um die Achse der Rotorwelle 3 und eine synchrone Verdrehung der anderen Kurvenscheiben 9 hervorruft, auch wenn die Verdrehungen nicht in deckungsgleichen Ebenen stattfinden.

Ebenso wird ersichtlich, dass der Mitnehmerzapfen 19 in der Ausnehmung 9a der Kurvenscheibe 9 nicht nur drehbar, sondern auch translatorisch in der Ausnehmung 9a der Kurvenscheibe 9 bewegbar ist. Zwischen der jeweiligen Kurvenscheibe 9 und dem jeweiligen Mitnehmerzapfen 19 ist daher eine Rollreibung realisiert.

Alle diese Elemente bzw. diese Komponenten, also die Kurvenscheiben 9, die Steuerscheibe 8, das Federelement 12 und das Koppelelement 18 sind nun derart ausgebildet und angeordnet, dass das Haltemoment bzw. die Haltekräfte entsprechend auf die Rotorblätter 2 übertragbar sind, so dass deren Position entsprechend steuerbar bzw. regelbar ist. Hierzu darf nochmals auch auf die Fig. 1a verwiesen werden. Deutlich ist hier erkennbar, dass der Druckpunkt D der Rotorblätter 2 der jeweiligen Verstellachse 4 nachläuft. Hierdurch bedingt kommt es bei Anströmung mit einer hohen Windgeschwindigkeit, zu einer Verdrehung ϕ der Rotorblätter 2 um die Verstellachse 4, insbesondere weil der Druckpunkt D eben außerhalb der jeweiligen Verstellachse 4 liegt.

Eine weitere bevorzugte Ausführungsform der hier dargestellten Winkel-Verstelleinrichtung 5 weist, wie aus den Fig. 6a, 6b, 6c bis Fig. 8a, 8b, 8c ersichtlich, eine Steuerscheibe 8, drei Kurvenscheiben 9 und ein Koppelelement 18 auf, wobei die Kurvenscheiben 9 über das Koppelelement 18 funktional wirksam zwangsgekoppelt sind. Das scheibenförmig ausgeführte Koppelelement 18 weist zu diesem Zweck Ausnehmungen 18a und die Kurvenscheiben 9 jeweils einen Mitnehmerfortsatz 29 auf, wobei jeder Mitnehmerfortsatz 29 der jeweiligen Kurvenscheibe 9 in eine zugehörige Ausnehmung 18a des Koppelelements 18 eingreift. Vorzugsweise ist der Mitnehmerfortsatz 29 hierzu als symmetrische Kugelscheibe ausgeführt. Der Mitnehmerfortsatz 29 ist in der zugehörigen Ausnehmung 18a des Koppelelements 18 nicht nur drehbar gelagert, sondern ist auch translatorisch in der Ausnehmung 18a des Koppelelements 18 bewegbar. Zwischen dem Mitnehmerfortsatz 29 und dem Koppelelement 18 ist eine Gleitreibung realisiert.

Fig. 6b zeigt zudem, dass die Steuerscheibe 8, sowie das Koppelelement 18 auf einer Steuerwelle 10 innerhalb der Rotornabe 7 angeordnet sind. Die Kurvenscheibe 9 und der Mitnehmerfortsatz 29 sind hier als ein einheitliches Konstruktionselement ausgeführt. Es ist aber ebenso denkbar, dass der Mitnehmerfortsatz 29 mit einer lösbaren formschlüssigen Verbindung an der Kurvenscheibe 9 fixiert ist.

Eine weitere Ausführungsform der hier dargestellten Windkraftanlage bzw. der Winkel-Verstelleinrichtung 5 weist, wie aus den Fig. 9a, 9b, 9c bis Fig. 11a, 11b, 11c ersichtlich, eine Steuerscheibe 8 und drei Kurvenscheiben 9 und ein Koppelelement 18, die funktional wirksam zwangsgekoppelt sind, auf. Das scheibenförmig ausgeführte Koppelelement 18 sowie die Kurvenscheiben 9 weisen zum diesem Zweck Öffnungen, vorzugsweise Durchgangsbohrungen auf, wobei ein erster Schenkel 39a eines winkelförmigen Verbindungselements 39 in eine Öffnung 18b des Koppelelements 18 und ein zweiter Schenkel 39b des winkelförmigen Verbindungselements 39 in eine Öffnung 9b der Kurvenscheibe 9 eingreift. Das jeweilige Verbindungselement 39 ist derart positioniert, dass es zwischen dem Koppelelement 18 und der jeweiligen Kurvenscheibe 9 liegt bzw. hierzwischen wirksam angeordnet ist. Vorzugsweise bilden sowohl die Öffnung 9b der Kurvenscheibe 9 sowie die Öffnung 18b des Koppelelements 18 mit dem jeweils zugehörigen ersten Schenkel 39a bzw. zweiten Schenkel 39b des Verbindungselements 39 einen Schiebesitz aus. Ferner ist der erste Schenkel 39a bzw. der zweite Schenkel 39b des Verbindungselements 39 in der jeweiligen Öffnung 9b bzw. 18b mittels eines Lagers 40a, 40b drehbar gelagert.

Eine weitere bevorzugte Ausführungsform der hier dargestellten Winkel-Verstelleinrichtung 5 weist, wie aus den Fig. 12a, 12b, 12c bis Fig. 17a, 17b, 17c ersichtlich, eine Steuerscheibe 8, drei Kurvenscheiben 9 und ein Koppelelement 18 auf, wobei die Kurvenscheiben 9 funktional wirksam über das Koppelelement 18 zwangsgekoppelt sind. Das scheibenförmig ausgeführte Koppelelement 18 weist zu diesem Zweck sowie die Kurvenscheiben 9 zumindest abschnittsweise eine zueinander passende Verzahnung 26a / 26b auf. Die Verzahnung 26a / 26b kann als Kegelradverzahnung wie in den Fig. 12a, 12b, 12c bis Fig. 14a, 14b, 14c dargestellt oder als Stirnrad- / Kronenradverzahnung wie in Fig. 15a, 15b, 15c bis Fig. 17a, 17b, 17c dargestellt, ausgeführt sein.

In das Koppelelement 18 sind jeweilige Verzahnungen 28a und in die jeweilige Kurvenscheibe 9 ist hier jeweils eine geeignete Verzahnung 26b eingebracht und dementsprechend als ein Konstruktionselement ausgeführt. Es ist aber ebenso denkbar, dass die jeweilige Verzahnung 26a / 26b, als einzelnes Verzahnungsmodul mit einer lösbaren formschlüssigen Verbindung an dem Koppelelement 18 oder auf der Kurvenscheibe 9 fixiert ist. Im Falle eines Schadens an der jeweiligen Verzahnung 26a / 26b brauchen in diesem Falle dann nur die Verzahnungsmodule gewechselt werden und nicht die Kurvenscheibe 9 und/oder das Koppelelement 18 in der Gänze.

Eine weitere bevorzugte Ausführungsform der hier dargestellten Winkel-Verstelleinrichtung 5 weist, wie aus den Fig. 18a, 18b, 18c bis Fig. 20a, 20b, 20c ersichtlich, eine Steuerscheibe 8, drei Kurvenscheiben 9 und ein Koppelelement 18 auf, wobei die Kurvenscheiben 9 funktional wirksam über das Koppelelement 18 zwangsgekoppelt sind. Wie in der Fig. 18b dargestellt ist das Koppelelement 18 als eine Halbkugel ausgebildet.

Das halbkugelförmige Koppelelement 18 weist auf der Außenseite der Halbkugel für jede Kurvenscheibe 9 eine Kulisse 27, vorzugsweise eine schlitz- oder nutförmig ausgebildete Kulisse 27 auf. Die Kulisse 27 ist für die Aufnahme eines mit der zugehörigen Kurvenscheibe 9 in Wirkbeziehung stehenden Kulissensteins 22 geeignet und/oder ein Kulissenstein 22 ist in der jeweiligen Kulisse 27 gleitend angeordnet. Der Kulissenstein 22 weist eine Kavität 28 auf, die insbesondere als Durchgangsbohrung ausgeführt ist, wobei die zugehörige Kurvenscheibe 9 mittels eines an ihr feststehend angebrachten Stifts 23 in die Kavität 28 im Kulissenstein 22 eingreift. Die Kavität 28 des Kulissensteins 22 bildet mit dem zugehörigen Stift 23 vorzugsweise einen Schiebesitz aus, wobei der Stift 23 in dem zugehörigen Kulissenstein 22 drehbar gelagert ist. Hierzu kann auch ein geeignetes Lager 24 in der Kavität 28 des Kulissensteins 22 vorgesehen sein. Der Stift 23 wiederum ist in der Kurvenscheibe 9 formschlüssig lösbar fixiert. Denkbar ist auch der umgekehrte Fall, dass der Stift mit dem Kulissenstein verbunden ist und drehbar bzw. verschiebbar in einer Kavität der Kurvenscheibe gelagert bzw. geführt ist.

Schließlich darf noch darauf hingewiesen werden, dass die Steuerscheibe 8 in ihrem mittleren Bereich eine im Wesentlichen axial verlaufende Ausnehmung 8a aufweist, die insbesondere zumindest teilweise so ausgebildet ist, dass das Federelement 12 zumindest teilweise innerhalb der Ausnehmung 8a anordenbar bzw. angeordnet ist. Dies gilt im Wesentlichen für alle in den Figuren 3 bis 20 dargestellten Ausführungsformen. Hierdurch bedingt ist eine sehr kompakte Bauform einer Rotornabe 7 ermöglicht.

Die hier in den Figuren 1 bis 20 dargestellte Winkel-Verstelleinrichtung 5 ist insbesondere als eine sogenannte "passive" Winkel-Verstelleinrichtung 5 ausgeführt und/oder ausgebildet, wie bereits oben zuvor erläutert. Insbesondere wird die Steuerscheibe 8 hierbei durch ein Federelement 12 in Richtung der Kurvenscheiben 9 kraftbeaufschlagt, so dass die einzelnen Kurvenscheiben 9 insbesondere mit der Steuerscheibe 8 in einem reibschlüssigen Kontakt stehen. Über den jeweiligen Konturverlauf der Kontur 16 der jeweiligen Kurvenscheiben 9 in Kombination mit der Steuerscheibe 8 und/oder dem Federelement 12, das insbesondere dann eine bestimmte Federsteifigkeit aufweist, wird dann die zuvor genannte Steuerung bzw. Einstellung der Rotorblätter 2 mit Hilfe der insbesondere dann derart ausgebildeten passiven Winkel-Verstelleinrichtung 5 im Betrieb automatisch realisiert. Dies hat den Vorteil, dass zur Einstellung/Steuerung der Rotorblätter 2 keine separaten motorischen Antriebe notwendig sind.

### Bezugszeichenliste

- 1: Rotor
- 2: Rotorblatt
- 3: Rotorwelle
- 4: Verstellachse
- 5: Winkel-Verstelleinrichtung
- 6: Wellenstumpf
- 7: Rotornabe
- 8: Steuerscheibe
- 8a: Ausnehmung
- 9: Kurvenscheibe
- 9a: Ausnehmung
- 9b: Öffnung
- 10: Steuerwelle
- 11: Lager
- 12: Feder
- 13: Lager
- 14: Umfangswandung
- 15: Lager
- 16: Kontur
- 17: Extrema
- 18: Koppelelement
- 18a: Ausnehmung
- 18b: Öffnung
- 19: Mitnehmerzapfen
- 19a: Kugelscheibe
- 20: Schraubelement
- 21: Lager
- 22: Kulissenstein
- 23: Stift
- 24: Lager
- 25: Lagerbolzen
- 26a, 26b: Verzahnung
- 27: Kulisse
- 28: Kavität
- 29: Mitnehmerfortsatz
- 39: Winkelförmiges Verbindungselement
- 39a: erster Schenkel des winkelförmigen Verbindungselements
- 39b: zweiter Schenkel des winkelförmigen Verbindungselements
- 40a: Lager
- 40b: Lager
- W: Wind
- D: Druckpunkt
- M_{S}: Massenschwerpunkt
- A: Pfeil
- γ: Konuswinkel
- **ϕ**: Verstellwinkel der Rotorblätter
- α: Verdrehwinkel des Koppelelementes

## Patentansprüche

1. Windkraftanlage mit mindestens einem Rotor (1) wobei der Rotor (1) mindestens zwei Rotorblätter (2) aufweist, wobei jedes Rotorblatt (2) um eine im Wesentlichen radial ausgerichtete Verstellachse (4) drehbar ist, wobei zur Einstellung der Rotorblätter (2) mindestens eine Winkel-Verstelleinrichtung (5) vorgesehen ist, wobei die Winkel-Verstelleinrichtung (5) mindestens eine Steuerscheibe (8) und mindestens zwei mit der Steuerscheibe (8) zusammenwirkende Kurvenscheiben (9) aufweist, wobei jede Kurvenscheibe (9) um eine Drehachse drehbar gelagert ist, und wobei die Drehachse der jeweiligen Kurvenscheibe (9) mit der jeweiligen Verstellachse (4) des jeweiligen Rotorblatts (2) zusammenfällt, insbesondere überlagert ist,
**dadurch gegenzeichnet, dass**
die Kurvenscheiben (9) über mindestens ein Koppelelement (18) funktional wirksam zwangsgekoppelt sind.

2. Windkraftanlage nach Anspruch 1,
**dadurch gekennzeichnet, dass**
der Rotor (1) drei Rotorblätter (2) aufweist und mindestens drei mit der Steuerscheibe (8) zusammenwirkende Kurvenscheiben (9) vorgesehen sind.

3. Windkraftanlage nach Anspruch 1 oder 2,
**dadurch gekennzeichnet, dass**
das Koppelelement (18) scheibenförmig ausgeführt ist.

4. Windkraftanlage nach einem der Ansprüche 1 bis 3,
**dadurch gekennzeichnet, dass**
das Koppelelement (18) für jede Kurvenscheibe (9) einen Mitnehmerzapfen (19) aufweist, wobei der jeweilige
Mitnehmerzapfen (19) in eine Ausnehmung (9a) der Kurvenscheibe (9) eingreift.

5. Windkraftanlage nach Anspruch 4,
**dadurch gekennzeichnet, dass**
der Mitnehmerzapfen (19) als symmetrische Kugelscheibe (19a) ausgeführt ist.

6. Windkraftanlage nach Anspruch 4 oder 5,
**dadurch gekennzeichnet, dass**
der Mitnehmerzapfen (19) an einem an dem Koppelelement (18) versehenen Lagerbolzen (25) drehbar gelagert ist.

7. Windkraftanlage nach einem der Ansprüche 1 bis 3,
**dadurch gekennzeichnet, dass**
das Koppelelement (18) Ausnehmungen (18a)und die Kurvenscheibe (9) jeweils einen Mitnehmerfortsatz (29) aufweisen, wobei jeder Mitnehmerfortsatz (29) der jeweiligen Kurvenscheibe (9) in eine zugehörige Ausnehmung (18a) des Koppelelements (18) eingreift.

8. Windkraftanlage nach Anspruch 7,
**dadurch gekennzeichnet, dass**
der Mitnehmerfortsatz (29) als symmetrische Kugelscheibe ausgeführt ist.

9. Windkraftanlage nach Anspruch 7 oder 8,
**dadurch gekennzeichnet, dass**
der Mitnehmerfortsatz (29) in der zugehörigen Ausnehmung (18a)des Koppelelements (18) bewegbar, insbesondere drehbar gelagert ist.

10. Windkraftanlage nach einem der Ansprüche 1 bis 3,
**dadurch gekennzeichnet, dass**
zwischen dem Koppelelement (18) und der jeweiligen Kurvenscheibe (9) ein winkelförmiges Verbindungselement (39) vorgesehen ist, wobei das winkelförmige Verbindungselement (39) zwei Schenkel (39a, 39b)aufweist, wobei ein erster Schenkel (39a) des Verbindungselements (39) in eine Öffnung (18b) des Koppelelements (18) und ein zweiter Schenkel (39b) des Verbindungselements (39) in eine Öffnung (9b)der Kurvenscheibe (9) eingreift.

11. Windkraftanlage nach Anspruch 10,
**dadurch gekennzeichnet, dass**
sowohl die Öffnung (9b)der Kurvenscheibe (9) sowie die Öffnung (18b) des Koppelelements (18) mit dem jeweils zugehörigen ersten bzw. zweiten Schenkel (39a, 39b) des Verbindungselements (39) einen Schiebesitz ausbilden.

12. Windkraftanlage nach Anspruch 10 oder 11,
**dadurch gekennzeichnet, dass**
der erste bzw. zweite Schenkel (39a, 39b) des Verbindungselements (39) in der jeweiligen Öffnung drehbar gelagert ist.

13. Windkraftanlage nach einem der Ansprüche 1 bis 3,
**dadurch gekennzeichnet, dass**
die Kurvenscheibe (9) und das Koppelelement (18)zumindest abschnittsweise eine zueinander passende Verzahnung (26a / 26b) aufweisen.

14. Windkraftanlage nach Anspruch 13,
**dadurch gekennzeichnet, dass**
die Verzahnung (26a / 26b) als Stirn- / Kronenradverzahnung oder als Kegelradverzahnung ausgeführt ist.

15. Windkraftanlage nach Anspruch 1 oder 2,
**dadurch gekennzeichnet, dass**
das Koppelelement (18) als Halbkugel ausgebildet ist.

16. Windkraftanlage nach Anspruch 15,
**dadurch gekennzeichnet, dass**
die Außenseite der Halbkugel für jede Kurvenscheibe (9) eine Kulisse (27)aufweist und für die Aufnahme eines mit der zugehörigen Kurvenscheibe (9) in Wirkbeziehung stehenden Kulissensteins (22) geeignet ist und/oder ein Kulissenstein (22) in der jeweiligen Kulisse (27) gleitend angeordnet ist.

17. Windkraftanlage nach Anspruch 16,
**dadurch gekennzeichnet, dass**
der Kulissenstein (22) eine Kavität (28) aufweist, wobei die zugehörige Kurvenscheibe (9) mittels eines feststehend angebrachten Stifts (23) in die Kavität (28) im Kulissenstein (22) eingreift.

18. Windkraftanlage nach Anspruch 17,
**dadurch gekennzeichnet, dass**
der Stift (23) in der Kavität (28) des zugehörigen Kulissensteins (22) drehbar ist.

19. Windkraftanlage nach Anspruch 17 oder 18,
**dadurch gekennzeichnet, dass**
die Kavität (28) des Kulissensteins (22) mit dem jeweiligen Stift (23) als Schiebesitz ausgebildet ist.

20. Windkraftanlage nach einem der Ansprüche 17 bis 19,
**dadurch gekennzeichnet, dass**
die Kavität (28) als Durchgangsbohrung ausgeführt ist.

21. Windkraftanlage nach einem der Ansprüche 1 bis 20, **dadurch gekennzeichnet, dass** die Winkel-Verstelleinrichtung (5) als eine passive Winkel-Verstelleinrichtung (5) ausgeführt ist.

22. Windkraftanlage nach Patentanspruch 21, **dadurch gekennzeichnet, dass** die Steuerscheibe (8) durch ein Federelement (12) in Richtung der Kurvenscheiben (9) kraftbeaufschlagt ist.

## Claims

1. Wind power installation having at least one rotor (1), wherein the rotor (1) has at least two rotor blades (2), wherein each rotor blade (2) is rotatable about a substantially radially aligned adjustment axis (4), wherein at least one angle adjustment device (5) is provided for adjustment of the rotor blades (2), wherein the angle adjustment device (5) has at least one control disk (8) and at least two disk cams (9) acting in combination with the control disk (8), wherein each disk cam (9) is mounted so as to be rotatable about a rotation axis, and wherein the rotation axis of the respective disk cam (9) coincides with the respective adjustment axis (4) of the respective rotor blade (2), in particular is superimposed,
**characterized in that**
the disk cams (9) are coupled in constraint in a functionally operative manner via at least one coupling element (18).

2. Wind power installation according to Claim 1,
**characterized in that**
the rotor (1) has three rotor blades (2), and at least three disk cams (9) are provided, which act in combination with the control disk (8).

3. Wind power installation according to Claim 1 or 2,
**characterized in that**
the coupling element (18) is embodied in the form of a disk.

4. Wind power installation according to any one of Claims 1 to 3,
**characterized in that**
the coupling element (18) has a driver stud (19) for each disk cam (9), wherein the respective driver stud (19) engages in a recess (9a) of the disk cam (9).

5. Wind power installation according to Claim 4,
**characterized in that**
the driver stud (19) is embodied as a symmetrical spherical disk (19a).

6. Wind power installation according to Claim 4 or 5,
**characterized in that**
the driver stud (19) is rotatably mounted on a bearing bolt (25) provided on the coupling element (18).

7. Wind power installation according to any one of Claims 1 to 3,
**characterized in that**
the coupling element (18) has recesses (18a), and the disk cam (9) in each case has a driver extension (29), wherein each driver extension (29) of the respective disk cam (9) engages in an associated recess (18a) of the coupling element (18).

8. Wind power installation according to Claim 7,
**characterized in that**
the driver extension (29) is embodied as a symmetrical spherical disk.

9. Wind power installation according to Claim 7 or 8,
**characterized in that**
the driver extension (29) is movably, in particular rotatably, mounted in the associated recess (18a) of the coupling element (18).

10. Wind power installation according to any one of Claims 1 to 3,
**characterized in that**
an angular connection element (39) is provided between the coupling element (18) and the respective disk cam (9), wherein the angular connection element (39) has two limbs (39a, 39b), wherein a first limb (39a) of the connection element (39) engages in an opening (18b) of the coupling element (18), and a second limb (39b) of the connection element (39) engages in an opening (9b) of the disk cam (9).

11. Wind power installation according to Claim 10,
**characterized in that**
both the opening (9b) of the disk cam (9) and the opening (18b) of the coupling element (18) form a close sliding fit with the respectively associated first and second limb (39a, 39b), respectively, of the connection element (39).

12. Wind power installation according to Claim 10 or 11,
**characterized in that**
the first and second limb (39a, 39b), respectively, of the connection element (39) are rotatably mounted in the respective opening.

13. Wind power installation according to any one of Claims 1 to 3,
**characterized in that**
the disk cam (9) and the coupling element (18) have a mutually fitting toothing (26a / 26b), at least portionally.

14. Wind power installation according to Claim 13,
**characterized in that**
the toothing (26a / 26b) is embodied as a spur / crown gear toothing or as a bevel gear toothing.

15. Wind power installation according to Claim 1 or 2,
**characterized in that**
the coupling element (18) is realized as a hemisphere.

16. Wind power installation according to Claim 15,
**characterized in that**
the outside of the hemisphere has a slideway (27) for each disk cam (9), and is suitable for receiving a sliding block (22) that has an operative relationship with the associated disk cam (9), and/or a sliding block (22) is arranged in a sliding manner in the respective slideway (27).

17. Wind power installation according to Claim 16,
**characterized in that**
the sliding block (22) has a cavity (28), wherein the associated disk cam (9) engages in the cavity (28) in the sliding block (22) by means of a fixedly attached pin (23).

18. Wind power installation according to Claim 17,
**characterized in that**
the pin (23) is rotatable in the cavity (28) of the associated sliding block (22).

19. Wind power installation according to Claim 17 or 18,
**characterized in that**
the cavity (28) of the sliding block (22) is realized as a close sliding fit with the respective pin (23).

20. Wind power installation according to any one of Claims 17 to 19,
**characterized in that**
the cavity (28) is embodied as a through-opening.

21. Wind power installation according to any one of Claims 1 to 20, **characterized in that** the angle adjustment device (5) is embodied as a passive angle adjustment device (5).

22. Wind power installation according to Patent Claim 21, **characterized in that** force is applied to the control disk (8) by a spring element (12), in the direction of the disk cams (9).

## Revendications

1. Installation éolienne, comprenant au moins un rotor (1), le rotor (1) présentant au moins deux pales de rotor (2), chaque pale de rotor (2) pouvant tourner autour d'un axe de réglage (4) orienté de manière substantiellement radiale, dans laquelle au moins un dispositif de réglage d'angle (5) est prévu pour régler les pales de rotor (2), le dispositif de réglage d'angle (5) présentant au moins un disque de commande (8) et au moins deux disques à came (9) coopérant avec le disque de commande (8), chaque disque à came (9) étant monté rotatif autour d'un axe de rotation, et l'axe de rotation du disque à came (9) respectif coïncidant, en particulier en étant superposé, avec l'axe de réglage (4) respectif de la pale de rotor (2) respective,
**caractérisée en ce que** les disques à came (9) sont couplés en force pour un fonctionnement efficace par l'intermédiaire d'au moins un élément de couplage (18).

2. Installation éolienne selon la revendication 1, **caractérisée en ce que** le rotor (1) présente trois pales de rotor (2), et au moins trois disques à came (9) coopérant avec le disque de commande (8) sont prévus.

3. Installation éolienne selon la revendication 1 ou 2, **caractérisée en ce que** l'élément de couplage (18) est réalisé en forme de rondelle.

4. Installation éolienne selon l'une quelconque des revendications 1 à 3, **caractérisée en ce que** l'élément de couplage (18) présente pour chaque disque à came (9) un pivot d'entraînement (19), le pivot d'entraînement (19) respectif venant en prise dans un évidement (9a) du disque à came (9).

5. Installation éolienne selon la revendication 4, **caractérisée en ce que** le pivot d'entraînement (19) est réalisé sous la forme d'une rondelle sphérique symétrique (19a).

6. Installation éolienne selon la revendication 4 ou 5, **caractérisée en ce que** le pivot d'entraînement (19) est monté rotatif sur un axe de palier (25) prévu sur l'élément de couplage (18).

7. Installation éolienne selon l'une quelconque des revendications 1 à 3, **caractérisée en ce que** l'élément de couplage (18) présente des évidements (18a) et le disque à came (9) présente une saillie d'entraînement (29), respectivement, chaque saillie d'entraînement (29) du disque à came (9) respectif venant en prise dans un évidement (18a) associé de l'élément de couplage (18).

8. Installation éolienne selon la revendication 7, **caractérisée en ce que** la saillie d'entraînement (29) est réalisée sous la forme d'une rondelle sphérique symétrique.

9. Installation éolienne selon la revendication 7 ou 8, **caractérisée en ce que** la saillie d'entraînement (29) est montée mobile, en particulier rotative, dans l'évidement (18a) associé de l'élément de couplage (18) .

10. Installation éolienne selon l'une quelconque des revendications 1 à 3, **caractérisée en ce qu'**un élément de raccordement (39) angulaire est prévu entre l'élément de couplage (18) et le disque à came (9) respectif, l'élément de raccordement (39) angulaire présentant deux branches (39a, 39b), une première branche (39a) de l'élément de raccordement (39) venant en prise dans une ouverture (18b) de l'élément de couplage (18), et une deuxième branche (39b) de l'élément de raccordement (39) venant en prise dans une ouverture (9b) du disque à came (9).

11. Installation éolienne selon la revendication 10, **caractérisée en ce qu'**à la fois l'ouverture (9b) du disque à came (9) et l'ouverture (18b) de l'élément de couplage (18) réalisent une assise coulissante avec la première ou la deuxième branche (39a, 39b) respectivement associée de l'élément de raccordement (39) .

12. Installation éolienne selon la revendication 10 ou 11, **caractérisée en ce que** la première ou la deuxième branche (39a, 39b) de l'élément de raccordement (39) est montée rotative dans l'ouverture respective.

13. Installation éolienne selon l'une quelconque des revendications 1 à 3, **caractérisée en ce que** le disque à came (9) et l'élément de couplage (18) présentent au moins par endroits une denture (26a/26b) mutuellement adaptée.

14. Installation éolienne selon la revendication 13, **caractérisée en ce que** la denture (26a/26b) est réalisée sous la forme d'une denture à roues droites/à roues de chant ou d'une denture à roues coniques.

15. Installation éolienne selon la revendication 1 ou 2, **caractérisée en ce que** l'élément de couplage (18) est réalisé sous la forme de demi-sphère.

16. Installation éolienne selon la revendication 15, **caractérisée en ce que** la face extérieure de la demi-sphère présente une coulisse (27) pour chaque disque à came (9) et est adaptée pour recevoir un coulisseau (22) en relation active avec le disque à came (9) associé, et/ou un coulisseau (22) est disposé de manière coulissante dans la coulisse (27) respective.

17. Installation éolienne selon la revendication 16, **caractérisée en ce que** le coulisseau (22) présente une cavité (28), le disque à came (9) associé venant en prise dans la cavité (28) dans le coulisseau (22) au moyen d'une broche (23) montée de manière fixe.

18. Installation éolienne selon la revendication 17, **caractérisée en ce que** la broche (23) peut tourner dans la cavité (28) du coulisseau (22) associé.

19. Installation éolienne selon la revendication 17 ou 18, **caractérisée en ce que** la cavité (28) du coulisseau (22) est réalisée avec la broche (23) respective sous forme d'assise coulissante.

20. Installation éolienne selon l'une quelconque des revendications 17 à 19, **caractérisée en ce que** la cavité (28) est réalisée sous forme de perçage traversant.

21. Installation éolienne selon l'une quelconque des revendications 1 à 20, **caractérisée en ce que** le dispositif de réglage d'angle (5) est réalisé sous la forme d'un dispositif de réglage d'angle passif (5).

22. Installation éolienne selon la revendication 21, **caractérisée en ce que** le disque de commande (8) est sollicité par une force par un élément de ressort (12) en direction des disques à came (9).
